# DEMANDE DE BREVET EUROPEEN

(11) **EP 4 749 246 A1**
(43) Date de publication de la demande: **27.05.2026**
(21) Numéro de dépôt: 25210877.4
(22) Date de dépôt: 23.10.2025
(51) Int. Cl.: G01D 11/30, B60R 19/48

(54) **ENSEMBLE POUR VÉHICULE AUTOMOBILE COMPRENANT UN CAPTEUR ET UN DISPOSITIF DE FIXATION POUR FIXER LE CAPTEUR**

(30) Priorité: 25.11.2024 FR 2412920
(71) Demandeur: Renault s.a.s, 92100 Boulogne Billancourt (FR)
(72) Inventeur: MONNARD, Daniel, 78280 Guyancourt (FR)

(57) **Abrégé**

L'invention concerne un ensemble pour un véhicule automobile, comprenant un capteur (9), une pièce (4) présentant un orifice (6) et un dispositif de fixation (11) pour fixer le capteur (9) à la pièce (4), caractérisé en ce que le dispositif de fixation (11) comprend une première et une deuxième plaques installées de part et d'autre de l'orifice (6) de la pièce (4), et fixées l'une à l'autre au travers de l'orifice (6) par au moins un organe de liaison, ledit au moins un organe de liaison maintenant la première et la deuxième plaques respectivement en appui (directement ou indirectement) contre deux surfaces de bordure opposées, les deux surfaces de bordure bordant l'orifice (6) de la pièce (4) et s'étendant respectivement selon un premier et un deuxième plan d'appui ; l'une des première et deuxième plaques présentant au moins deux organes d'appui qui sont en appui contre une bordure de l'orifice (6) respectivement selon une première et une deuxième directions d'appui; la première et la deuxième direction d'appui étant sécantes l'une à l'autre ; et, en ce que le capteur (9) est solidarisé à la première plaque.

## Description

L'invention concerne le domaine des véhicules automobiles.

L'invention vise plus spécifiquement un ensemble comprenant un capteur et un dispositif de fixation pour fixer le capteur à une pièce de l'ensemble.

Dans un véhicule automobile, les capteurs jouent un rôle fondamental en collectant des données sur divers paramètres du véhicule et de son environnement.

Ces capteurs mesurent des variables physiques telles que la pression, la température, la position et la vitesse, et transmettent ces informations aux systèmes électroniques embarqués. Ces systèmes utilisent ensuite ces données pour optimiser le fonctionnement du moteur, améliorer la sécurité et offrir un meilleur confort aux occupants du véhicule.

Un capteur peut par exemple être un capteur de hauteur de caisse installé au niveau des feux avant ou à l'arrière du véhicule.

Habituellement, la fixation d'un capteur sur une pièce support se fait par collage, au moyen d'organes de fixation passant au travers de perçages dédiés, ménagés dans la pièce support ou par emboîtement de forme du capteur dans une zone usinée de la pièce support.

Cependant, ces méthodes de fixation présentent certains inconvénients. En effet, bien que simple, le collage n'offre pas la meilleur durabilité et solidité dans le temps. Les perçages ou les usinages, quant à eux, entraînent une dégradation de la pièce support.

De plus, pour certains capteurs tels que les capteurs de hauteur de caisse, il est nécessaire de les positionner précisément sinon cela peut entraîner des erreurs affectant leur performance et la précision des données collectées.

Cependant, les méthodes de fixation présentées ci-dessus ne permettent pas d'obtenir un niveau de précision suffisant pour obtenir des mesures fiables.

Il existe donc un besoin pour un dispositif de fixation permettant de fixer précisément et simplement un capteur dans un véhicule automobile.

A cet effet, il est proposé un ensemble pour un véhicule automobile, comprenant un capteur, une pièce présentant un orifice et un dispositif de fixation pour fixer le capteur à la pièce. Le dispositif de fixation comprend une première et une deuxième plaques installées de part et d'autre de l'orifice de la pièce, et fixées l'une à l'autre au travers de l'orifice par au moins un organe de liaison. Ledit au moins un organe de liaison maintenant la première et la deuxième plaques respectivement en appui, directement ou indirectement, contre deux surfaces de bordure opposées, les deux surfaces de bordure bordant l'orifice de la pièce et s'étendant respectivement selon un premier et un deuxième plan d'appui. L'une des première et deuxième plaques présentant au moins deux organes d'appui qui sont en appui contre une bordure de l'orifice respectivement selon une première et une deuxième directions d'appui. La première et la deuxième direction d'appui étant sécantes l'une à l'autre et le capteur est solidarisé à la première plaque.

Un tel dispositif de fixation permet de fixer précisément le capteur à la pièce de l'ensemble. En effet, l'une des deux plaques comprend plusieurs organes d'appui qui permettent de les positionner précisément au niveau de l'orifice et de les installer de manière qu'elles ne puissent pas être déplacées par le mouvement du véhicule.

De plus, le dispositif de fixation permet de fixer le capteur à la pièce de l'ensemble sans endommager ni modifier cette pièce.

Préférentiellement, le dispositif de fixation comprend deux organes de liaison pour fixer la première plaque à la deuxième plaque.

Cela permet un positionnement relatif stable des deux plaques l'une par rapport à l'autre.

Selon un mode de réalisation, les première et deuxième plaques présentent chacune une surface d'appui parallèle respectivement au premier et deuxième plan d'appui et les au moins deux organes d'appui sont des languettes perpendiculaires à la surface d'appui de la première ou deuxième plaque.

Préférentiellement, le dispositif de fixation comprend trois organes d'appui, le troisième organe d'appui est également en appui contre la bordure de l'orifice selon la première direction d'appui.

Un troisième organe d'appui permet d'obtenir un appui supplémentaire pour une meilleure stabilité du dispositif de fixation.

Selon un mode de réalisation, la pièce est un bras inférieur d'un train avant.

Selon un mode de réalisation, le capteur est un capteur de hauteur de caisse pour mesurer la hauteur de caisse du véhicule.

Préférentiellement, le capteur comprend un module de capteur destiné à être fixé à une pièce du véhicule automobile mobile par rapport à la pièce présentant l'orifice, une biellette présentant une première extrémité et une deuxième extrémité qui est opposée à la première extrémité, et une rotule qui est solidarisée de la deuxième extrémité de la biellette, ladite première extrémité étant solidarisée au module du capteur et la rotule étant solidarisée à la première plaque.

Avantageusement, l'une des première et deuxième plaques présente au moins deux protubérances, l'autre comporte des découpes et les protubérances et les découpes se situent verticalement en regard les unes des autres et sont agencés pour garantir un positionnement de la première plaque par rapport à la deuxième plaque.

Selon un mode de réalisation avantageux, certaines protubérances sont, également, des organes d'appui pour le dispositif de fixation. Les organes d'appui ont donc une double fonctionnalité, à savoir, d'une part, d'appui sur la bordure pour positionner l'une des plaques par rapport à la pièce et, d'autre part de positionnement relatif de ladite plaque par rapport à l'autre.

Préférentiellement, l'organe de liaison est un organe de liaison vissable.

Un autre objet de l'invention est un véhicule automobile comprenant l'ensemble décrit ci-dessus.

D'autres particularités et avantages de l'invention ressortiront à la lecture de la description faite ci-après de plusieurs modes de réalisation particuliers de l'invention, donnés à titre indicatif mais non limitatif, en référence aux dessins annexés sur lesquels:
- [Fig. 1] est une vue partielle en perspective d'une structure avant d'un véhicule automobile équipé d'un capteur et d'un dispositif de fixation pour fixer le capteur à la structure avant ;
- [Fig. 2] est une vue détaillée en perspective du capteur de la figure 1 ;
- [Fig. 3] est une autre vue en perspective de la structure avant de la figure 1, dans laquelle le capteur n'est pas représenté, permettant ainsi une meilleure visualisation du dispositif de fixation ;
- [Fig. 4] est une vue en perspective de la première plaque du dispositif de fixation ;
- [Fig. 5] est une vue en perspective de la deuxième plaque du dispositif de fixation ;
- [Fig. 6] est une vue schématique partielle d'une partie de la première plaque et deuxième plaque du dispositif de fixation.

Sur les figures, au regard du repère (X Y, Z), le véhicule automobile s'étend longitudinalement de l'avant vers l'arrière selon l'axe X, transversalement de la gauche vers la droite en situation de conduite, selon l'axe Y et verticalement à l'opposé de la surface d'appui selon l'axe Z.

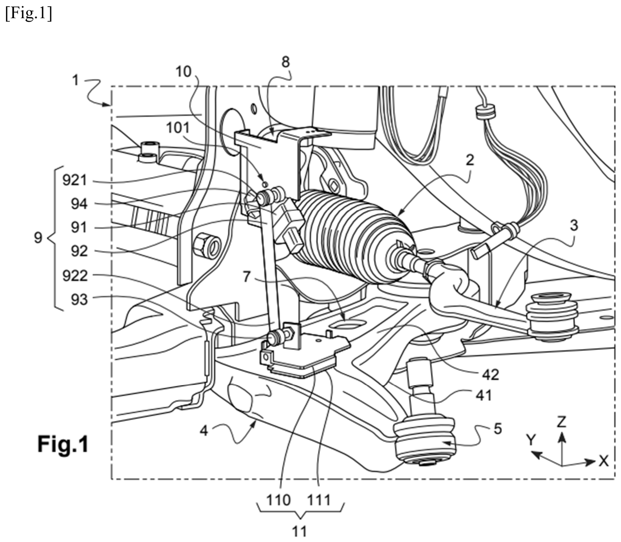

La figure 1 illustre une partie de la structure avant 1 d'un véhicule automobile.

La structure avant 1 présentée comprend une crémaillère de direction 2 connectée à une biellette de direction 3 ainsi qu'un bras inférieur 4.

Le bras inférieur 4, également connu sous le nom de bras de suspension, fait partie du train avant. Le train avant peut être, par exemple, de type pseudo McPherson.

Le bras inférieur 4 est équipé d'une rotule de suspension 5. La rotule de suspension 5 est reliée à la roue par l'intermédiaire d'une fusée d'essieu. Le bras inférieur 4 accompagne le mouvement de la roue du véhicule, se déplaçant de haut en bas par rapport à la surface d'appui selon l'axe Z.

Le bras inférieur 4 présente une face inférieure 41 et une face supérieure 42.

Ils présentent également deux orifices traversants 6 et 7. Les orifices 6, 7 peuvent avoir différentes formes et tailles. De tels orifices traversants 6, 7 visent notamment à alléger le bras inférieur 4. Sur la [Fig. 1], l'orifice 7 est oblong. A titre d'exemple, l'orifice 6 mesure 88 millimètres de longueur et 61 millimètres de largeur.

L'orifice traversant 6 est délimité par une bordure 63, c'est-à-dire une surface périphérique entourant l'orifice traversant 6. Le bras inférieur 4 présente, en outre, deux surfaces de bordure 61 et 62 opposées. Les surfaces de bordure 61 et 62 bordent l'orifice traversant 6 et sont respectivement ménagées sur les faces supérieure 42 et inférieure 41 du bras inférieur 4. La première surface de bordure 61 s'étend selon un premier plan d'appui, tandis que la deuxième surface de bordure 62 s'étend selon un deuxième plan d'appui.

La structure avant 1 comprend, en outre, une corne de berceau 8. La corne de berceau 8 est une partie structurelle du châssis du véhicule, appartenant au berceau qui est un sous-châssis. Le berceau supporte les principaux composants de la suspension, de la direction du véhicule ainsi que le groupe motopropulseur. Le berceau possède au moins deux cornes, qui sont des extensions ou des protubérances permettent de fixer divers éléments comme les composants de direction ou de suspension.

La structure avant 1 comprend, également, un capteur de hauteur de caisse 9 utilisé pour mesurer la hauteur de caisse du véhicule. Le capteur 9 est solidarisé à la corne du berceau 8 ainsi qu'au bras inférieur 4 mobile.

Le capteur 9 comprend un module 91. Le module 91 comprend un dispositif électronique permettant la mesure de la hauteur de caisse du véhicule et comporte un dispositif de connexion destiné à recevoir un connecteur pour connecter ledit module 91 au système électronique embarqué du véhicule.

Le module 91 du capteur est solidarisée à la corne du berceau 8.

Dans la [Fig. 1], le module du capteur 91 est fixée à une plaque 10 par une vis (non représentée) et la plaque 10 est également fixée à la corne du berceau 8 par une vis 11.

L'utilisation d'une vis n'est pas obligatoire, tout autre moyen de fixation couramment utilisé dans les véhicules automobiles peut être employé.

Le module du capteur 91 peut, également, être fixée à la corne du berceau 8 par des boulons et des écrous à travers des orifices prévus dans la corne du berceau et au niveau du capteur. Le module du capteur 91 peut aussi être fixée à la corne par des clips, des attaches ou encore par soudure.

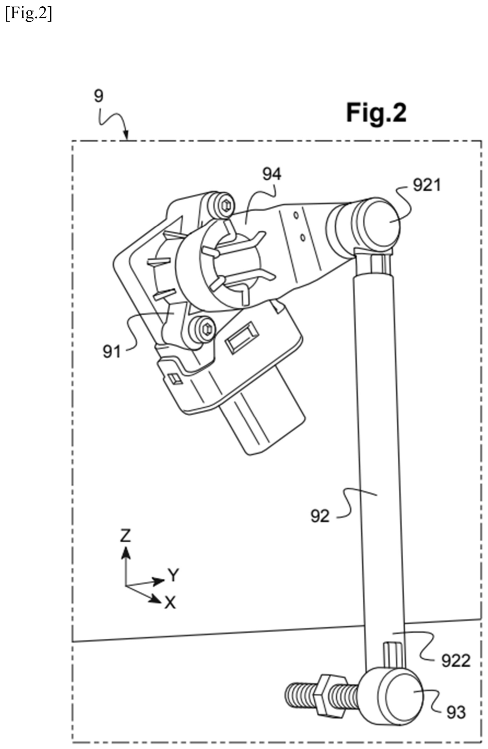

En référence à la [Fig. 2], le capteur 9 comprend une biellette 92 et un bras de levier 94.

La biellette 92 relie le bras de levier 94 du capteur 9 au bras inférieur 4 mobile.

La biellette 92 présente une première extrémité 921 et une deuxième extrémité 922 opposée à la première extrémité 921.

La première extrémité 921 est montée mobile en rotation sur le bras de levier 94. Le bras de levier 94, quant à lui, est monté mobile en rotation sur le module du capteur 91.

La deuxième extrémité 922 de la biellette 92 est montée mobile en mouvement sur la rotule 93.

La rotule 93 est fixée au bras inférieur 4 par un dispositif de fixation 11. La rotule 93 permet à la biellette 92 de pivoter librement selon plusieurs axes, assurant ainsi la mobilité nécessaire pour suivre les mouvements du véhicule.

Lors d'un déplacement relatif vertical du berceau 8 par rapport au bras inférieur 4, le bras de levier 94 ainsi que la biellette 92 pivotent afin de compenser ce déplacement relatif. Plus particulièrement, l'extrémité inférieure de la biellette 92 effectue un mouvement en arc de cercle dans un plan vertical contenant l'axe Z, par rapport au berceau 8, en suivant le mouvement du bras inférieur 4, et la biellette 92 et le bras de levier 94 pivotent selon un angle dont la valeur dépend du déplacement relatif selon l'axe Z.

Le module du capteur 91 comporte un moyen de mesure du pivotement du bras de levier 94, tel qu'un encodeur optique, un capteur à effet Hall ou un potentiomètre par exemple. Le moyen de mesure du pivotement du bras de levier permet de convertir l'angle de pivotement du bras de levier en un signal électrique exploitable par le système électronique embarqué du véhicule.

L'angle mesuré est ensuite converti en hauteur de caisse par le dispositif électronique du module 91 ou par le système électronique embarqué du véhicule.

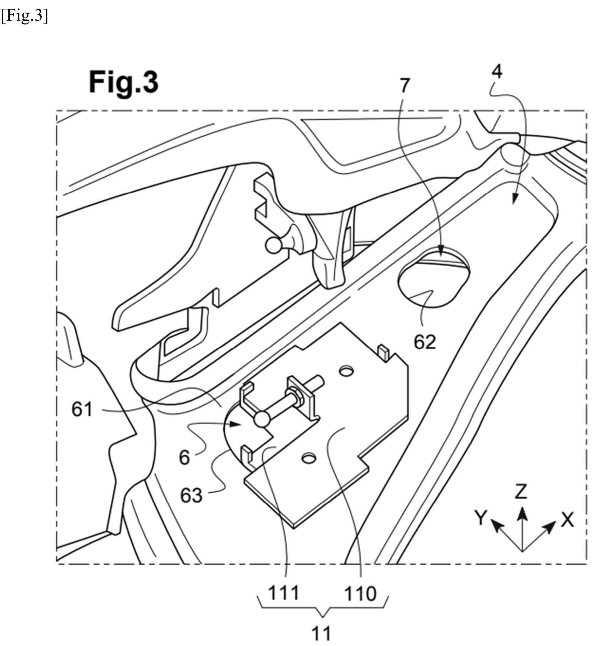

Selon la [Fig. 3], le dispositif de fixation 11 comprend une première plaque 110 et une deuxième plaque 111. La première et deuxième plaques 110, 111 sont installées de part et d'autre de l'orifice traversant 6 du bras inférieur 4.

Les plaques présentent chacune une surface d'appui plane 1101, 1111. Les plaques présentent une épaisseur comprise entre 1 et 3 millimètres.

La première et deuxième plaque peuvent être en métal, et notamment en alliage métallique, tel que l'acier, ou en matériau polymère.

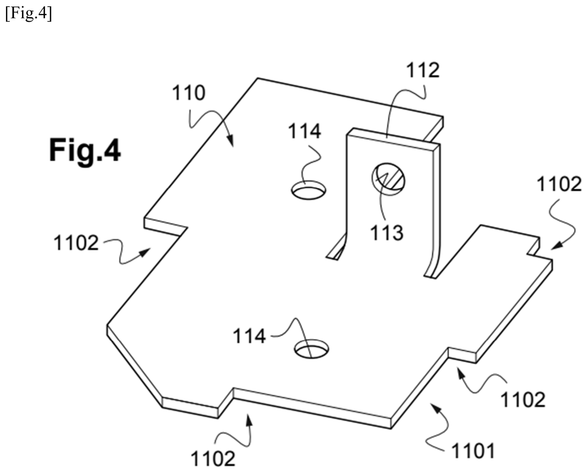

En référence à la [Fig. 4], la première plaque 110 présente une languette 112 perpendiculaire à la surface d'appui 1101 et faisant saillie vers le haut. La languette 112 présente un orifice traversant 113 permettant de la fixer à la rotule 93 par une vis.

La surface d'appui plane 1101 de la première plaque 110 est installée en appui contre la surface de bordure 61 de l'orifice 6 tandis la surface d'appui plane 1111 de la deuxième plaque 111 est installée en appui contre la surface de bordure 62 de l'orifice 6.

Sur la figure, la première plaque 110 et la deuxième plaque 111 sont respectivement disposées en appui directement contre les surfaces 61, 62 de bordure de l'orifice. Cependant, dans une réalisation alternative non représentée, l'appui de la première plaque 110 et/ou de la deuxième plaque 111 contre la surface 61, 62 de bordure respective peut se faire indirectement, c'est-à dire qu'une pièce intermédiaire est insérée entre ladite première ou deuxième plaque 110, 111 et la surface 61, 62 de bordure de l'orifice.

Chacune des première et deuxième plaques 110, 111 présente deux orifices 114. Les deux orifices 114 de la première plaque 110 sont chacun disposés en regard de l'un des orifices de la deuxième plaque. Ainsi, un organe de liaison (non représenté) traverse un orifice 114 de chacune des première et deuxième plaques 110, 111 ainsi que l'orifice 6 du bras inférieur 4. Les organes de liaison sont agencés pour fixer la première et la deuxième plaques 110, 111, l'une à l'autre et exercé un effort de fixation perpendiculaire à leur surface d'appui plane 1101, 1111. Ainsi, les organes de fixation permettent aux première et deuxième plaques 110, 111 de prendre en sandwich le bras inférieur 4. La première et la deuxième plaque 110, 111, et plus particulièrement leur surface d'appui plane 1101, 1111, sont ainsi respectivement plaquées contre l'une et l'autre des deux surfaces de bordure 61, 62. Les organes de liaison utilisés sont des organes de liaison vissable tels que des vis ou des boulons.

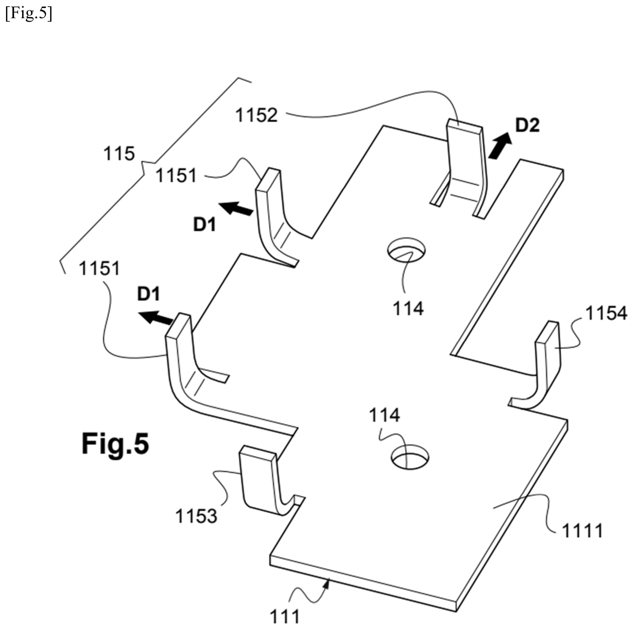

En référence à la [Fig. 5], on observe que la deuxième plaque 111 présente cinq protubérances 1151, 1152, 1153, 1154. Les protubérances sont des pattes pliées perpendiculaires à la surface d'appui plane 1111 de la deuxième plaque 111 et leur hauteur varie entre 10 et 20 millimètres (bornes comprises). Elles sont formées, par exemple, par pliage en pliant une partie de la deuxième plaque 111.

Trois des protubérances sont des organes d'appui 115. Les organes d'appui 115 sont en appui et en contact avec la bordure 63 de l'orifice 6.

Deux des organes d'appui 1151 sont en appui selon une première direction d'appui D1 tandis qu'un autre organe d'appui 1152 est en appui selon une deuxième direction d'appui D2. La première D1 et deuxième D2 direction d'appui sont sécantes et avantageusement perpendiculaires l'une à l'autre.

Le contact des deux organes d'appui 1151 est un contact d'appui assimilable à un contact d'appui linéique tandis que le contact de l'organe d'appui 1152 est un contact d'appui assimilable à un contact d'appui ponctuel.

Ces trois organes d'appui permettent de positionner précisément la deuxième plaque 111 selon les axes X et Y tandis que le contact des surfaces d'appui plane 1101, 1111 contre les deux surfaces de bordure 61, 62 assure un positionnement précis selon l'axe Z.

Les deux autres protubérances 1153, 1154 servent quant à elles à guider le mouvement de la deuxième plaque 111 à l'intérieur de l'ouverture 6 du bras inférieur. La protubérance 1153 fait face à la bordure 63 de l'orifice 6 dans une direction opposée à la deuxième direction D2 tandis que la protubérance 1154 fait face à la bordure 63 de l'orifice 6 dans une direction opposée à la deuxième direction D2.

Pour réaliser un pré-positionnement de la première plaque 110 par rapport à la deuxième plaque 111, la première plaque présente des découpes 1102 qui se situent verticalement en regard des organes d'appui 1151, 1152 et de la languette 1153 lorsque la première plaque 110 et la deuxième plaque 111 sont correctement orientées l'une par rapport à l'autre selon les axes X et Y. En d'autres termes, les organes d'appui 11151, 1152, la languette 1153 et les découpes 1102 sont positionnées de manière à ne permettre qu'un seul alignement correct entre la première plaque 110 et la deuxième plaque 111. Si les plaques 110, 111 ne sont pas correctement orientées, les organes d'appui 1151, 1152 et la languette 1153 ne pourront pas s'insérer dans les découpes 1102.

A titre d'exemple, sur la [Fig. 5], les découpes 1102 sont réalisées de telle sorte que les protubérances 1151, 1152, 1154 reposent chacun contre un angle droit de l'une des découpes 1102.

Ainsi les organes d'appui 1151, 1152 ont une double fonctionnalité : d'une part, d'appui contre la bordure 63 pour positionner la plaque 111 par rapport au bras inférieur 6 et d'autre part, de positionnement relatif des plaques 110 et 111 tandis que la protubérances 1154 a une double fonctionnalité de guidage et de positionnement relatif des plaques 110, 111. La fabrication du dispositif de fixation 11 en est donc simplifié en ce que le nombre de protubérances peut être réduit grâce à leur double fonctionnalité.

Le nombre d'organe d'appui n'est pas limité à trois, tel que présentés ci-dessus. Le dispositif de fixation peut en comprendre au minimum deux. Des organes d'appui supplémentaires peuvent fournir un support additionnel le long de la bordure 63 de l'orifice 6.

Une partie des organes d'appui peut également être installée sur la première plaque, tandis que l'autre partie est installée sur la deuxième plaque.

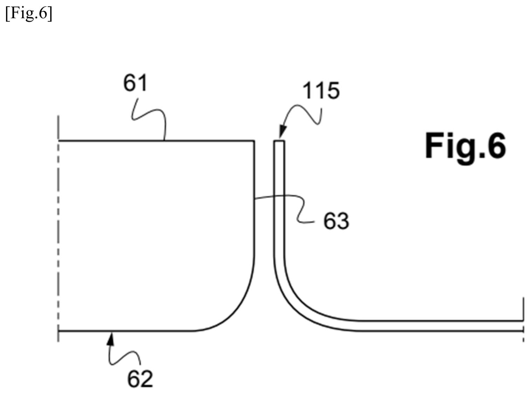

Préférentiellement, les organes d'appui 115 sont installés sur la deuxième plaque 111, c'est-à-dire celle qui est en dessous du bras inférieur 4, afin d'assurer une plus grande surface de contact avec la bordure 63 de l'orifice 6. En effet, pour des raisons de fabrication, tel qu'illustré sur la [Fig. 6], au niveau de la surface d'appui 61, la bordure 63 présente un angle droit tandis qu'au niveau de la surface d'appui 62, la bordure 63 présente un angle arrondi. Etant donné que l'organe d'appui 115 est réalisé par pliage, il est préférable de le placer sur la deuxième plaque 111 pour optimiser sa surface de contact avec la bordure 63.

Le dispositif de fixation 11 permet ainsi d'immobiliser le capteur angulaire dans une position précise, évitant tout risque d'inversion mécanique ou de mesures imprécises.

En effet, le capteur angulaire, comme tout autre capteur, doit être positionné avec précision, car toute déviation peut fausser les mesures et, par conséquent, la hauteur de caisse déterminée.

De plus, le capteur angulaire fonctionne sur trois plages non-cumulables de plus ou moins 54 degrés autour de son axe de rotation. Dépasser l'une de ces limites réinitialise le capteur, entraînant la perte de son calibrage.

Le capteur angulaire fonctionne sur une plage de 120° avec un angle maximum et un angle minimum. Si ces angles sont dépassés par le bras de levier 94, il y a un risque d'inversion mécanique pouvant endommager le capteur 9 et entraîner une perte de mesure de la hauteur de caisse.

Il est donc nécessaire de fixer la base de la biellette 92 de manière précise et sûre avec le dispositif de fixation 11 décrit précédemment pour éviter les inconvénients mentionnés.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, telle que définie par les revendications.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Ensemble pour un véhicule automobile, comprenant un capteur (9), une pièce (4) présentant un orifice (6) et un dispositif de fixation (11) pour fixer le capteur (9) à la pièce (4), **caractérisé en ce que** le dispositif de fixation (11) comprend une première (110) et une deuxième (111) plaques installées de part et d'autre de l'orifice (6) de la pièce (4), et fixées l'une à l'autre au travers de l'orifice (6) par au moins un organe de liaison, ledit au moins un organe de liaison maintenant la première (110) et la deuxième (111) plaques respectivement en appui contre deux surfaces de bordure (61, 62) opposées, les deux surfaces de bordure (61, 62) bordant l'orifice (6) de la pièce (4) et s'étendant respectivement selon un premier et un deuxième plan d'appui ; l'une des première (110) et deuxième (111) plaques présentant au moins deux organes d'appui (115, 1151, 1152) qui sont en appui contre une bordure (63) de l'orifice (6) respectivement selon une première (D1) et une deuxième (D2) directions d'appui; la première (D1) et la deuxième (D2) direction d'appui étant sécantes l'une à l'autre ; et, **en ce que** le capteur (9) est solidarisé à la première plaque (110).

2. Ensemble pour un véhicule automobile selon la revendication 1, **caractérisé en ce que** le dispositif de fixation (11) comprend deux organes de liaison pour fixer la première plaque (110) à la deuxième plaque (111).

3. Ensemble selon la revendication 1 ou 2, **caractérisé en ce que** les première (110) et deuxième (111) plaques présentent chacune une surface d'appui plane (1101, 1111) respectivement en appui contre les surfaces (61, 62) de bordure de l'orifice (6) et **en ce que** les au moins deux organes d'appui (115) sont des pattes perpendiculaires à la surface d'appui de la première ou deuxième plaque.

4. Ensemble selon l'une quelconque des revendications 1 à 3, **caractérisé en ce que** le dispositif de fixation (11) comprend trois organes d'appui (115), le troisième organe d'appui (1151) est également en appui contre la bordure (63) de l'orifice (6) selon la première direction d'appui (D1).

5. Ensemble selon l'une quelconque des revendications 1 à 4, **caractérisé en ce que** la pièce (4) est un bras inférieur (4) d'un train avant.

6. Ensemble selon l'une quelconque des revendications 1 à 5, **caractérisé en ce que** le capteur (9) est un capteur de mesure de hauteur de caisse.

7. Ensemble selon l'une quelconque des revendications 1 à 6, **caractérisé en ce que** le capteur (9) comprend un module de capteur (91) destiné à être fixé à une pièce du véhicule automobile mobile par rapport à la pièce (4) présentant l'orifice (6), une biellette (92) présentant une première extrémité (921) et une deuxième extrémité (922) qui est opposée à la première extrémité (921), et une rotule (93) qui est solidarisée de la deuxième extrémité (922) de la biellette (92), ladite première extrémité (921) étant solidarisée au module du capteur (91) et la rotule (93) étant solidarisée à la première plaque (110).

8. Ensemble selon l'une quelconque des revendications 1 à 7, **caractérisé en ce que** l'une des première (110) et deuxième (111) plaques présente au moins deux protubérances (1151, 1152, 1154), l'autre comporte des découpes (1102) et **en ce que** les protubérances (1151, 1152, 1154) et les découpes (1102) se situent verticalement en regard les unes des autres et sont agencés pour garantir un positionnement de la première plaque (110) par rapport à la deuxième plaque (111).

9. Ensemble selon l'une quelconque des revendications 1 à 8, **caractérisé en ce que** l'organe de liaison est un organe de liaison vissable.

10. Véhicule automobile comprenant un ensemble selon l'une des revendications 1 à 9.
